# EUROPÄISCHE PATENTANMELDUNG

(11) **EP 3 050 890 A1**
(43) Veröffentlichungstag der Anmeldung: **03.08.2016**
(21) Anmeldenummer: 15152591.2
(22) Anmeldetag: 27.01.2015
(51) Int. Cl.: C07F 9/09, C08G 18/48, C08K 5/00, C09K 21/00, C08K 5/521

(54) **Hydroxylgruppen-haltige Poly(alkylenphosphate)**

(71) Anmelder: LANXESS Deutschland GmbH, 50569 Köln (DE)
(72) Erfinder: Hansel, Jan-Gerd, 51469 Bergisch Gladbach (DE); Tebbe, Heiko, 41539 Dormagen (DE); Wittpahl, Michael, 41334 Nettetal (DE)

(57) **Zusammenfassung**

Die vorliegende Erfindung betrifft Zusammensetzungen enthaltend Hydroxylgruppen-haltige Poly(alkylenphosphate) gemäss Formel (I), ein Verfahren zu ihrer Herstellung sowie ihre Verwendung als Flammschutzmittel in Polyurethanen. 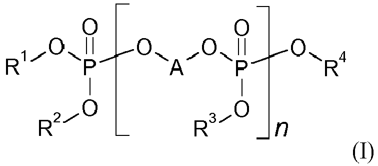 Kennzeichnend für Formel (I) ist, dass mindestens einer der reste R¹, R², R³ und R⁴ für einen Rest der Formel -(CHR⁵-CHR⁶-O)ₘ-H steht.

## Beschreibung

Die vorliegende Erfindung betrifft Zusammensetzungen enthaltend Hydroxylgruppen-haltige Poly(alkylenphosphate), ein Verfahren zu ihrer Herstellung sowie ihre Verwendung als Flammschutzmittel in Polyurethanen.

Polyurethane werden in vielen Bereichen, wie Möbel, Matratzen, Transport, Elektro, Bau und technische Dämmung eingesetzt. Zur Erfüllung hoher Flammschutzanforderungen, wie sie für Materialien u. a. für den Automobil-, Bahn- und Flugzeuginnenausstattungsbereich sowie die Bauisolierung gefordert sind, müssen Polyurethane, insbesondere Polyurethanschaumstoffe in der Regel mit Flammschutzmitteln ausgerüstet werden. Hierzu ist bereits eine Vielzahl unterschiedlicher Flammschutzmittel bekannt und kommerziell erhältlich. Deren Verwendung stehen allerdings vielfach erhebliche anwendungstechnische Probleme bzw. toxikologische Bedenken entgegen.

So treten bei der Verwendung fester Flammschutzmittel wie z. B. Melamin, Ammoniumpolyphosphat und Ammoniumsulfat aufgrund von Sedimentation oder Aggregation dosiertechnische Probleme auf, die vielfach technische Modifikationen der Verschäumanlagen, d. h. aufwendige Umbauten und Anpassungen notwendig machen.

Die häufig eingesetzten Chloralkylphosphate Tris(chlorethyl)phosphat, Tris(chlorisopropyl)-phosphat und Tris(dichlorisopropyl)phosphat stellen zwar leicht dosierbare Flüssigkeiten dar. Von offenzelligen Polyurethanweichschaumsystemen für die Automobil-Innenausstattung wird jedoch in letzter Zeit immer häufiger gefordert, dass die gasförmigen Emissionen (Volatile Organic Compounds, VOC) und vor allem die kondensierbaren Emissionen (Fogging) aus diesen Schäumen niedrige Grenzwerte nicht überschreiten sollen. Diesen Anforderungen werden die oben genannten Flüssigkeiten aufgrund ihrer zu hohen Flüchtigkeit nicht mehr gerecht.

Unter "Fogging" versteht man die unerwünschte Kondensation von verdampften flüchtigen Bestandteilen aus der Kraftfahrzeug-Innenausstattung an Glasscheiben, insbesondere an der Windschutzscheibe. Diese Erscheinung kann nach DIN 75 201 B quantitativ beurteilt werden. Die Automobilindustrie fordert typischerweise, dass das Fogging-Kondensat nach der Methode DIN 75201 B weniger als 1 mg betragen darf.

Weiterhin werden aus ökotoxikologischen Gesichtspunkten sowie aufgrund verbesserter Brandnebenerscheinungen bezüglich Rauchgasdichte und Rauchgastoxizität halogenfreie Flammschutzmittel bevorzugt. Auch aus anwendungstechnischen Gründen können halogenfreie Flammschutzmittel von besonderem Interesse sein. So beobachtet man z. B. bei der Verwendung von halogenierten Flammschutzmitteln starke Korrosionserscheinungen an den zur Flammkaschierung von Polyurethanschäumen verwendeten Anlagenteilen. Dies kann auf die bei der Flammkaschierung halogenhaltiger Polyurethanschäume auftretenden Halogenwasserstoffsäure-Emissionen zurückgeführt werden.

Als Flammkaschierung bezeichnet man ein Verfahren zur Verbindung von Textilien und Schaumstoffen, bei der eine Seite einer Schaumstofffolie mit Hilfe einer Flamme angeschmolzen und in unmittelbarem Anschluss daran mit einer Textilbahn verpresst wird.

Die bisher bekannten flüssigen halogenfreien Flammschutzmittelsysteme, wie z. B. Triethylphosphat oder andere Alkyl- oder Arylphosphate, wie beispielsweise Diphenylkresylphosphat, genügen den oben genannten Anforderungen an geringe VOC bzw. geringes Fogging nur unzureichend oder zeigen keine ausreichende Flammschutzwirkung.

Lösungen im Sinne niedriger Foggingbeiträge bieten Hydroxylgruppen-haltige Poly(alkylen-phosphate). Diese Stoffe enthalten alkoholische Hydroxylgruppen, welche bei der Herstellung der Polyurethanschaumstoffe mit den dabei verwendeten Polyisocyanaten reagieren und so für eine feste Verankerung der Flammschutzmittel in der Polymermatrix sorgen. Hydroxylgruppen-haltige Poly(alkylenphosphate) und Verfahren zu ihrer Herstellung sind bekannt, beispielsweise aus DE-A 20 36 587, DE-A 20 36 595 B1, EP-A 0 658 561, EP-A 0 658 580 oder EP-A 0 771 810.

Die im genannten Stand der Technik beschriebenen Hydroxylgruppen-haltigen Poly(alkylen-phosphate) weisen Nachteile auf. Zum einen ist für ihre Herstellung der Einsatz des phosphorhaltigen Rohstoffs Phosphorpentoxid erforderlich. Phosphorpentoxid ist ein stark ätzender, extrem hygroskopischer Feststoff, dessen Handhabung schwierig und gefährlich ist. Wünschenswert ist daher eine Synthese von Hydroxylgruppen-haltigen Poly(alkylenphosphaten) unter Verwendung besser handhabbarer Rohstoffe.

Zum anderen werden die Hydroxylgruppen-haltigen Poly(alkylenphosphate) in den bekannten Herstellverfahren in verunreinigter Form erhalten. Es bilden sich bei ihrer Herstellung unerwünschte phosphorhaltige Verbindungen, insbesondere fünfgliedrige, cyclische Phosphate. Nach E. D. Weil, R. B. Fearing, F. Jaffe, J. Fire Retardant Chem., 1982, 9, 39, lässt sich die Gegenwart dieser fünfgliedrigen, cyclischen Phosphate mittels ³¹P-NMR-Spektroskopie leicht nachweisen, da ihr Resonanzsignal bei einer chemischen Verschiebung von 17 - 18 ppm liegt und sich somit deutlich von den Signalen der Hauptprodukte (Poly(alkylenphosphate)) absetzt. Laut Weil et al. führt die Gegenwart dieser fünfgliedrigen, cyclischen Phosphate zu unerwünschter Hydrolyseanfälligkeit und Säurebildung. Darüber hinaus enthalten Poly(alkylenphosphate) mit einem hohen Gehalt an solchen unerwünschten phosphorhaltigen Verbindungen, insbesondere an fünfgliedrigen, cyclischen Phosphaten, auch mehr flüchtige Komponenten und ergeben damit auch erhöhte Mengen an Fogging-Kondensat.

Das Problem des Auftretens von unerwünschten phosphorhaltigen Nebenprodukten, insbesondere fünfgliedrigen, cyclischen Phosphaten, bei der Herstellung von phosphorhaltigen oligomeren Kondensationsprodukten ist seit langem bekannt, und es hat zahlreiche Vorschläge zu seiner Lösung gegeben, wie aus US 3,891,727, US 3,959,415, US 3,959,414, US 4,012,463 und EP-A 0 448 159 bekannt ist. Nach diesen Lösungsvorschlägen läuft die Vermeidung oder Verringerung des Gehalts an solchen Verunreinigungen immer auf einen Mehraufwand, beispielsweise in Form von nachgeschalteten Reinigungsschritten, bei der Synthese dieser phosphorhaltigen oligomeren Kondensationsprodukte hinaus.

Wünschenswert ist daher ein verbesserter Zugang zu Hydroxylgruppen-haltigen Poly(alkylenphosphaten) mit einem niederigem Gehalt an unerwünschten phosphorhaltigen Nebenprodukten, insbesondere fünfgliedrigen, cyclischen Phosphaten. Es ist Aufgabe der vorliegenden Erfindung, Hydroxylgruppen-haltige Poly(alkylenphosphate) zur Verfügung zu stellen, die die genannten Nachteile des Standes der Technik überwinden.

Es wurde gefunden, dass sich durch ein neues Herstellverfahren Zusammensetzungen Hydroxylgruppen-haltiger Poly(alkylenphosphat)e herstellen lassen, die überraschender Weise einen niedrigen Gehalt an unerwünschten phosphorhaltigen Verbindungen aufweisen.

Gegenstand der vorliegenden Erfindung ist daher eine Zusammensetzung enthaltend
mindestens ein Hydroxylgruppen-haltiges Poly(alkylenphosphat) der Formel (I) 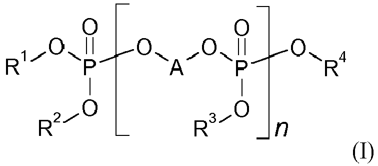 worin
n für eine ganze Zahl von 1 bis 100 steht,
R¹, R², R³ und R⁴ unabhängig voneinander für einen C₁- bis C₈-Alkylrest oder einen Rest der Formel -(CHR⁵-CHR⁶-O)ₘ-H stehen,
worin
m für eine ganze Zahl von 1 bis 5 steht und
R⁵ und R⁶ unabhängig voneinander für H oder Methyl stehen,
mit der Bedingung, dass mindestens einer der Reste R¹, R², R³ und R⁴ für einen Rest der Formel -(CHR⁵-CHR⁶-O)ₘ-H steht,
A für einen geradkettigen oder verzweigten C₄- bis C₂₀-Alkylenrest oder für einen C₃-bis C₆-Cycloalkylenrest steht, oder
A für einen Rest der Formel -CH₂-CH=CH-CH₂-, einen Rest der Formel -CH₂-C≡C-CH₂-, einen Rest der Formel -CHR⁵-CHR⁶-(O-CHR⁷-CHR⁸)ₐ-, einen Rest der Formel -CHR⁵-CHR⁶-S(O)_{b}-CHR⁷-CHR⁸- oder einen Rest der Formel -(CHR⁵-CHR⁶-O)_{c}-R⁹-(O-CHR⁷-CHR⁸)_{d}- steht,
worin
a für eine ganze Zahl von 0 bis 5 steht,
b für eine ganze Zahl von 0 bis 2 steht,
c und d unabhängig voneinander für eine ganze Zahl von 1 bis 5 stehen,
R⁵, R⁶, R⁷ und R⁸ unabhängig voneinander für H oder Methyl stehen,
R⁹ für einen Rest -CH₂-CH=CH-CH₂-, einen Rest -CH₂-C≡C-CH₂-, einen 1,2-Phenylenrest, einen 1,3-Phenylenrest, ein 1,4-Phenylenrest, oder einen Rest der Formel (II) 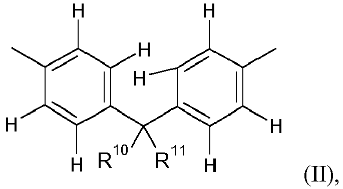 oder einen Rest der Formel (III) 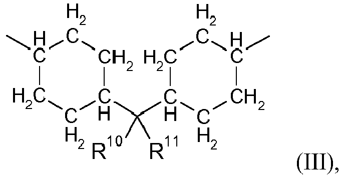 oder einen Rest der Formel (IV) 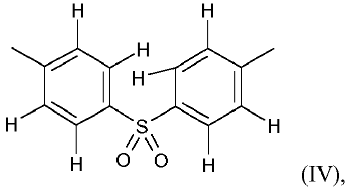 oder einen Rest der Formel -C(=O)-R¹²-C(=O)- steht,
wobei
R¹⁰ und R¹¹ unabhängig voneinander jeweils für H oder C₁- bis C₄-Alkyl stehen,
oder
R¹⁰ und R¹¹ zusammen mit dem Kohlenstoffatom an das sie gebunden sind für einen gegebenenfalls alkylsubstituierten carbocyclischen Ring mit 4 bis 8 C-Atomen stehen,
und
R¹² für einen geradkettigen oder verzweigten C₂- bis C₈-Alkylenrest, einen C₃- bis C₆-Cycloalkylenrest, einen 1,2-Phenylenrest, einen 1,3-Phenylenrest, oder einen 1,4-Phenylenrest steht,
dadurch gekennzeichnet, dass im ³¹P-NMR Spektrum der Zusammensetzung, aufgenommen in CDCl₃ als Lösungsmittel mit 85 gewichtsprozentiger Phosphorsäure als externen Standard, die Fläche unter allen Resonanzsignalen im Bereich von 13 bis 18 ppm 5 Prozent oder weniger der gesamten Flächen aller Resonanzsignale im Bereich von - 30 bis 200 ppm beträgt.

Die in der Bedeutung von R¹, R², R³ und R⁴ genannten C₁- bis C₈-Alkylreste sind bevorzugt gleich und stehen insbesondere für Ethyl, n-Propyl, iso-Propyl, n-Butyl oder iso-Butyl.

Bevorzugt steht A für einen geradkettigen C₄- bis C₆-Alkylenrest.

Ebenfalls bevorzugt steht A für einen Rest der Formel -CHR⁵-CHR⁶-(O-CHR⁷-CHR⁸)ₐ-, worin a eine Zahl von 0 bis 2 ist und R⁵, R⁶, R⁷ und R⁸ gleich sind und für H stehen.

Bevorzugt ist eine Zusammensetzung enthaltend
mindestens ein Hydroxylgruppen-haltiges Poly(alkylenphosphat) der Formel (I) 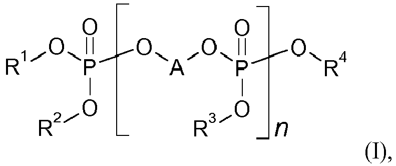 worin
n für eine ganze Zahl von 1 bis 10 steht,
R¹, R², R³ und R⁴ unabhängig voneinander für Ethyl, n-Propyl, iso-Propyl, n-Butyl oder iso -Butyl oder für einen Rest der Formel -(CHR⁵-CHR⁶-O)ₘ-H stehen,
worin
m für eine ganze Zahl von 1 bis 2 steht und
R⁵ und R⁶ unabhängig voneinander für H oder Methyl stehen,
mit der Bedingung, dass mindestens einer der Reste R¹, R², R³ und R⁴ für einen Rest der Formel -(CHR⁵-CHR⁶-O)ₘ-H steht,
A für einen geradkettigen C₄- bis C₆-Alkylenrest oder für einen Rest der Formel
-CHR⁵-CHR⁶-(O-CHR⁷-CHR⁸)ₐ- steht,
worin
a für eine ganze Zahl von 0 bis 2 steht
und
R⁵, R⁶, R⁷ und R⁸ unabhängig voneinander für H oder Methyl stehen.

Besonders bevorzugt ist eine Zusammensetzung enthaltend
mindestens ein Hydroxylgruppen-haltiges Poly(alkylenphosphat) der Formel (I) 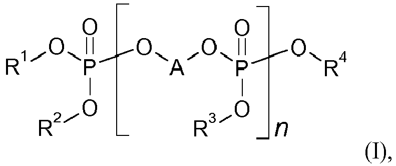 worin
n für eine ganze Zahl von 1 bis 10 steht,
R¹, R², R³ und R⁴ unabhängig voneinander für Ethyl, n-Propyl, oder n-Butyl oder einen Rest der Formel -(CHR⁵-CHR⁶-O)ₘ-H stehen,
worin
m für 1 oder 2 steht und
R⁵ und R⁶ unabhängig voneinander für H oder Methyl stehen,
mit der Bedingung, dass mindestens einer der Reste R¹, R², R³ und R⁴ für einen Rest der Formel -(CHR⁵-CHR⁶-O)ₘ-H steht,
A für einen geradkettigen C₄- Alkylenrest oder für einen Rest der Formel
-CHR⁵-CHR⁶-(O-CHR⁷-CHR⁸)ₐ- steht,
worin
a für 0 oder 1 steht,
R⁵ und R⁶ unabhängig voneinander für H oder Methyl stehen
und
R⁷ und R⁸ gleich sind und für H stehen.

Ganz besonders bevorzugt sind erfindungsgemäße Zusammensetzungen enthaltend mindestens ein Hydroxylgruppen-haltiges Poly(alkylenphosphat der Formel (I), worin die Reste R¹, R², R³ und R⁴ für Ethyl oder für den Rest -CH₂-CHCH₃-OH oder -CHCH₃-CH₂-OH stehen, wobei mindestens einer der Reste R¹, R², R³ und R⁴ für -CH₂-CHCH₃-OH oder -CHCH₃-CH₂-OH steht und A für den Rest -CH₂CH₂OCH₂CH₂- steht.

In einer bevorzugten Ausführungsform der Erfindung enthält die erfindungsgemäße Zusammensetzung eine Mischung voneinander verschiedener Hydroxylgruppen-haltiger Poly(alkylenphosphate) der Formel (I) die sich mindestens in der Anzahl *n* der Repetiereinheiten und/oder der Indices a, b, c, d, m, und damit in ihrer Molmasse voneinander unterscheiden. Besonders bevorzugt enthält die erfindungsgemäße Zusammensetzung Mischungen solcher isomerer und/oder oligomerer Hydroxylgruppen-haltiger Poly(alkylenphosphate) der Formel (I). In diesem Fall bietet es sich an, die Oligomeremischung durch die Mittelwerte der genannten Zahlen zu charakterisieren.

Bevorzugt sind die erfindungsgemäßen Zusammensetzungen halogenfrei. Der Begriff "halogenfrei" bedeutet, dass die Zusammensetzungen keine anderen Substanzen in einer Menge enthält, die einen Gehalt an den Elementen Fluor, Chlor, Brom und/oder Iod von größer als 5000 ppm bezogen auf die gesamte Zusammensetzung verursachen.

Bevorzugt handelt es sich bei den erfindungsgemäßen, Hydroxylgruppen-haltige Poly(alkylenphosphate) der Formel (I) enthaltenden Zusammensetzungen um bei Verarbeitungstemperatur flüssige Substanzen. Unter der Verarbeitungstemperatur wird hierbei die Temperatur verstanden, bei der die Polyurethanrohstoffe den Dosier- und Mischaggregaten der Herstellanlagen zugeführt werden. In der Regel werden hier in Anhängigkeit der Viskositäten der Komponenten und Auslegung der Dosieraggregate Temperaturen zwischen 20 und 80 °C gewählt.

Vorzugsweise haben die erfindungsgemäßen Zusammensetzungen bei 23 °C eine Viskosität zwischen 10 mPas und 10 000 mPas. Bei der Viskosität handelt es sich um die sogenannte dynamische Viskosität die beispielsweise mit einem Viskosimeter des Typs "SVM 3000" der Fa. Anton Paar GmbH bestimmt werden kann.

Die Hydroxylzahl der erfindungsgemäßen Zusammensetzungen beträgt im allgemeinen 15 bis 300, bevorzugt 30 bis 250 mg KOH/g. Die Hydroxylzahl gibt die Menge Kaliumhydroxid in Milligramm an, welche der bei einer Acetylierung von einem Gramm Substanz gebundenen Menge Essigsäure gleichwertig ist. Die Bestimmung der Hydroxylzahl kann in dem Fachmann bekannter Art und Weise, z.B. wie in DIN 53240 beschrieben vorgenommen werden.

Der Phosphorgehalt der erfindungsgemäßen Zusammensetzungen beträgt im allgemeinen 10 bis 20 Gew.-%, vorzugsweise 12 bis 18 Gew.-% bezogen auf die gesamte Zusammensetzung.

Der Phosphorgehalt kann in dem Fachmann bekannter Weise, z.B. gravimetrisch bestimmt werden. Dazu wird die organische Substanz, im vorliegenden Fall die erfindungsgemäße Zusammensetzung, zunächst "aufgeschlossen", d.h. unter Einsatz von Säure, gegebenenfalls Oxidationsmitteln und Anwendung von Hitze und/oder Druck, in meist anorganische Fragmente und hier vor allem in lösliches, anorganisches Phosphat bzw. Phosphorsäure zerlegt. Das Phosphat bzw. die Phosphorsäure wird dann z.B. durch Zusatz von Ammonium-heptamolybdat-Lösung als schwerlösliches Ammonium-molybdophosphat gefällt und gravimetrisch bestimmt. Dem Fachmann sind aber auch alternative Methoden der Quantifizierung nach dem Aufschluss bekannt, z. B. durch Einsatz der Colorimetrie.

Die erfindungsgemäßen Zusammensetzungen zeichnen sich dadurch aus, dass in deren ³¹P-NMR Spektren, aufgenommen in CDCl₃ als Lösungsmittel mit 85 gewichtsprozentiger Phosphorsäure als externen Standard, die Fläche unter allen Resonanzsignalen im Bereich von 13 bis 18 ppm 5 Prozent oder weniger, vorzugsweise 3 Prozent oder weniger, der gesamten Fläche aller Resonanzsignale im gemessenen Bereich von - 30 bis 200 ppm beträgt.

Die auf diese Weise ermittelten Flächenprozent können nahezu gleich gesetzt werden mit Molprozent. Daraus folgt, dass die erfindungsgemäßen Zusammensetzungen 5 Mol-% oder weniger, vorzugsweise 3 Mol-% oder weniger, Phosphor aus phosphorhaltigen Verbindungen, deren Resonanzsignal in der ³¹P-NMR-Spektroskopie bei einer chemische Verschiebung im Bereich von 13 ppm bis 18 ppm gegenüber 85 gewichtsprozentiger Phosphorsäure als externen Standard liegt, wobei sich die in Mol-% angegebene Menge auf die Summe aller in der Zusammensetzung enthaltenen Phosphoratome bezieht und durch quantitative ³¹P-NMR-Spektroskopie ermittelt wurde.

Insbesondere handelt es sich bei diesen phosphorhaltigen Verbindungen um cyclische fünfgliedrige Phosphorsäureester, die mindestens eine Struktureinheit der Formel 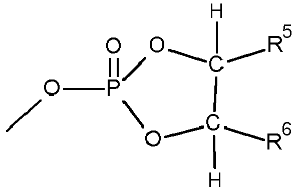 worin R⁵ und R⁶ unabhängig voneinander für Wasserstoff oder Methyl stehen,
aufweisen.

Im Sinne der vorliegenden Erfindung wurde die Fläche unter allen Resonanzsignalen im Bereich von - 30 bis 200 ppm durch quantitative ³¹P-NMR-Spektroskopie ermittelt.

Die Methode der ³¹P-NMR-Spektroskopie ist dem Fachmann bekannt. Im Falle der vorliegenden Erfindung wurden zur Aufnahme der ³¹P-NMR-Spektren zunächst möglichst genau 100 mg der zu untersuchenden erfindungsgemäßen Zusammensetzung abgewogen, in 5 ml deuteriertem Chloroform (CDCl₃) gelöst und in ein NMR-Messröhrchen mit einem Durchmesser von 5 mm gefüllt. Für die vorliegenden NMR-spektroskopischen Untersuchungen wurde und wird ein Gerät vom Typ DPX-400 der Fa. Bruker eingesetzt. Die Spektren werden bei 161,9 MHz mit einem Delay von 1 s, 256 Scans + 2 Dummy-Scans, einer Pulslänge von 6,5 µs und einer Sweep Width von 81521,7 Hz aufgenommen. Die chemische Verschiebung der Resonanzsignale wurde gegen 85 gewichtsprozentige Phosphorsäure als externen Standard angegeben.

Zur quantitativen Auswertung wurden und werden die Flächen unter den jeweiligen Resonanzsignalen innerhalb der angegebenen Grenzen von - 30 bis 200 ppm manuell integriert. Erfindungsgemäß wurde und wird die Summe aller so ermittelten Flächen auf 100 Prozent normiert und die Fläche unter den Resonanzsignalen im Bereich von 13 bis 18 ppm dazu prozentual ins Verhältnis gesetzt.

Die vorliegende Erfindung betrifft weiterhin ein neues Verfahren zur Herstellung der erfindungsgemäßen Zusammensetzungen.

Gegenstand der vorliegenden Erfindung ist ein Verfahren zur Herstellung einer Zusammensetzung enthaltend
mindestens ein Hydroxylgruppen-haltiges Poly(alkylenphosphat) der Formel (I) 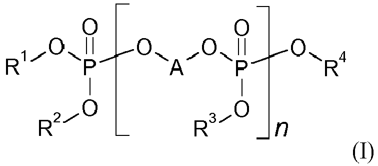 worin die Substituenten R¹ bis R⁴ und der Index n die oben für die Formel (I) allgemeine und bevorzugten Bedeutungen haben,
dadurch gekennzeichnet, dass man
a) ein Polyalkylenchlorphosphat der Formel (V), 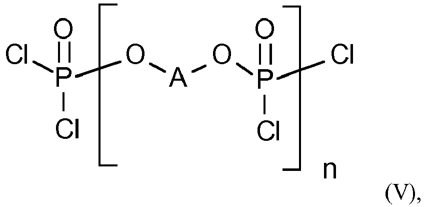 worin A und n die oben, in der Definition von Formel (I) angegebenen, allgemeinen und bevorzugten Bedeutung haben,
   mit einer Mischung enthaltend mindestens einen C₁- bis C₈-Alkohol und Wasser umsetzt, und
b) das Produkt der Umsetzung aus a) mit mindestens einer Verbindung der Formel (VI) 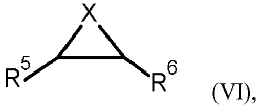 worin
   X für -O- oder -O-C(=O)-O- steht und
   R⁵ und R⁶ die oben, in der Definition von Formel (I) angegebenen, allgemeinen und bevorzugten Bedeutungen haben,
   umsetzt.

Die Polyalkylenchlorphosphate der Formel (V) werden bevorzugt aus Phosphoroxychlorid und einem Diol der Formel HO-A-OH, worin A die oben, in der Definition der Formel (I) angegebene allgemeine und bevorzugte Bedeutung hat, hergestellt. Diese Stoffe und Verfahren zu ihrer Herstellung sind beispielsweise aus EP-A 2 687 534 bekannt. Das erfindungsgemäße Herstellverfahren leitet sich demzufolge von Phosphoroxychlorid ab, welches als Flüssigkeit wesentlich einfacher zu handhaben ist als der Feststoff Phosphorpentoxid.

Bevorzugt enthält die in Stufe a) des erfindungsgemäßen Verfahrens eingesetzte Mischung mindestens einen C₁- bis C₈-Alkohol und 1 mol-% bis 75 mol-% Wasser bezogen auf die Summe aus C₁- bis C₈-Alkohol und Wasser. Besonders bevorzugt enthält die Mischung 5 mol-% bis 40 mol-% Wasser bezogen auf die Summe aus C₁- bis C₈-Alkohol und Wasser.

Die Einsatzmenge der Mischung aus C₁- bis C₈-Alkohol und Wasser wird im erfindungsgemäßen Verfahren so gewählt, dass die Summe der Molzahlen von C₁- bis C₈-Alkohol und Wasser mindestens der Molzahl der im Polyalkylenchlorphosphat der Formel (V) enthaltenen Chloratome entspricht. Bevorzugt wird ein Überschuss der Mischung aus C₁- bis C₈-Alkohol und Wasser relativ zu der im Polyalkylenchlorphosphat der Formel (V) enthaltenen Chloratome eingesetzt. Besonders bevorzugt ist die Summe der Molzahlen von C₁- bis C₈-Alkohol und Wasser 2 bis 10 mal so groß wie die Molzahl der im Polyalkylenchlorphosphat der Formel (V) enthaltenen Chloratome.

Als C₁- bis C₈-Alkohol kommen insbesondere Ethyanol, n-Propanol, iso-Propanol, n-Butanol und/oder iso -Butanol in Frage. Besonders bevorzugt sind Ethanol, n-Butanol oder Mischungen daraus.

Das Produkt aus Stufe a) wird im allgemeinen isoliert oder ohne Zwischenisolierung mit der Verbindung (VI) umgesetzt. Die Einsatzmenge der Verbindung (VI) richtet sich nach der in Stufe a) eingesetzten Menge Wasser. Im Allgemeinen werden 0,1 bis 10 Mol der Verbindung (VI) pro 1 Mol Wasser eingesetzt, bevorzugt werden 0,5 bis 5 Mol der Verbindung (VI) pro 1 Mol Wasser eingesetzt, besonders bevorzugt werden 0,9 bis 2,5 Mol der Verbindung (VI) pro 1 Mol Wasser eingesetzt.

Bei der in Stufe b) des erfindungsgemäßen Verfahrens eingesetzten Verbindung der Formel (VI) handelt es sich bevorzugt um ein Alkylenoxid, wie beispielsweise Ethylenoxid, Propylenoxid, 1,2-Butylenoxid oder Glycidol, oder um ein Alkylencarbonat, wie beispielsweise Ethylencarbonat oder Propylencarbonat. Besonders bevorzugt handelt es sich bei der Verbindung der Formel (VI) um Ethylenoxid, Propylenoxid oder eine Mischung der beiden.

Stufe a) des erfindungsgemäßen Verfahrens wird im allgemeinen bei einer Temperatur im Bereich von -20 °C bis +100 °C durchgeführt. Bevorzugt wird Stufe a) des erfindungsgemäßen Verfahrens bei einer Temperatur im Bereich von -10 °C bis +80 °C und besonders bevorzugt bei einer Temperatur im Bereich von 0 °C bis +50 °C durchgeführt.

Stufe a) des erfindungsgemäßen Verfahrens wir im allgemeinen bei einem Druck im Bereich von 1 mbar bis 3000 mbar, bevorzugt von 5 mbar bis 2500 mbar mbar und besonders bevorzugt von 10 mbar bis 2000 mbar durchgeführt.

Die Umsetzung in Stufe a) wird in der Regel so durchgeführt, dass man die Reaktionsteilnehmer kontinuierlich oder ansatzweise in Kontakt miteinander bringt und die Reaktionstemperatur durch Heizen oder Abführung von Reaktionswärme im gewünschten Bereich hält. Bevorzugt wird der sich in der Reaktion bildende Chlorwasserstoff während oder nach der Reaktion in an sich bekannter Weise, beispielsweise durch Verdampfen, von der Reaktionsmischung abgetrennt.

In einer alternativen, ebenfalls bevorzugten Ausführungsform der Erfindung wird der Chlorwasserstoff von einer Base neutralisiert. Die Base kann dabei der Reaktionsmischung entweder zu Beginn der Reaktion oder nach nahezu vollständigem Umsatz zugesetzt werden. Das aus Base und Chlorwasserstoff gebildete Koppelprodukt wird anschließend durch bekannte Methoden, wie beispielsweise Filtration oder wässrige Extraktion, von der Reaktionsmischung abgetrennt. Geeignet für das erfindungsgemäße Verfahren sind anorganische Basen, wie beispielsweise Metallhydroxide, -oxide, -carbonate, -hydrogencarbonate und dergleichen, oder organische Basen, wie besipielsweise Trialkylamine, Pyridin, Amidine, Guanidine, und dergleichen.

Ein eventueller Überschuss an C₁- bis C₈-Alkohol und / oder Wasser in der Reaktionsmischung kann vor Durchführung der Stufe b) durch bekannte Methoden, bevorzugt durch Destillation, abgetrennt werden.

Stufe b) des erfindungsgemäßen Verfahrens wird im allgemeinen bei einer Temperatur im Bereich von 0 °C bis +180 °C durchgeführt. Bevorzugt wird Stufe b) des erfindungsgemäßen Verfahrens bei einer Temperatur im Bereich von 10 °C bis +160 °C und besonders bevorzugt bei einer Temperatur im Bereich von 20 °C bis +140 °C durchgeführt.

Stufe b) des erfindungsgemäßen Verfahrens wir im allgemeinen bei einem Druck im Bereich von 100 mbar bis 6000 mbar, bevorzugt 500 mbar bis 6000 mbar und besonders bevorzugt 950 mbar bis 6000 mbar durchgeführt.

Die Umsetzung in Stufe b) wird in der Regel so durchgeführt, dass man das aus Stufe a) erhaltene Zwischenprodukt durch Zufuhr von Wärme auf die Reaktionstemperatur erhitzt und dann die Verbindung der Formel (VI) kontinuierlich oder in Portionen zufügt. Wenn der gewünschte Umsatz erreicht ist, werden ein eventuell vorhandener Überschuss der Verbindung der Formel (VI) sowie gegebenenfalls andere leicht flüchtige Substanzen durch bekannte Methoden, bevorzugt durch Destillation, abgetrennt. Daran können sich weitere Reinigungsoperationen, wie beispielsweise Klärung, Entfärbung, Filtration und dergleichen anschließen.

In einer bevorzugten Ausführungsform der Erfindung enthält die erfindungsgemäße Zusammensetzung eine Mischung verschiedener isomerer und/oder oligomerer Hydroxylgruppen-haltigen Poly(alkylenphosphate) der Formel (I). Eine Oligomerenmischung, die sich aus Molekülen unterschiedlicher Kettenlänge n (beispielsweise charakterisiert durch den Mittelwert der Kettenlänge n) zusammensetzt, lässt sich nach dem oben angegebenen, erfindungsgemäßen Verfahren herstellen, indem in das Verfahren eine Mischung aus mindestens zwei verschiedenen Polyalkylenchlorphosphaten der Formel (V), die sich im Wert der Zahl n voneinander unterscheiden, eingesetzt wird.

Gegenstand der Erfindung ist weiterhin die Verwendung der erfindungsgemäßen Zusammensetzungen als Flammschutzmittel für synthetische und natürliche Werkstoffe, wie beispielsweise synthetische Polymere, gegebenenfalls modifizierte natürliche Polymere, Holzwerkstoffe, Leder und Papier. Aufgrund ihrer reaktiven Natur eignet sie sich insbesondere für Reaktivharze, wie beispielsweise Polyurethane und Epoxidharze.

Bei ihrer Verwendung als Flammschutzmittel können die erfindungsgemäßen Zusammensetzungen weitere Flammschutzmittel, Hilfs- und Zusatzstoffe enthalten.

Weiterer Gegenstand der vorliegenden Erfindung sind Flammschutzmittel-Zubereitungen enthaltend eine erfindungsgemäße Zusammensetzung und ein oder mehrere Hilfs- oder zusatzstoffe B).

Als Hilfs- oder Zusatzstoffe B) kommen beispielsweise in Frage Lösungsmittel, wie z. B. Wasser oder Alkylester aliphatischer oder aromatischer Di- oder Tricarbonsäuren, Antioxidatien und Stabilisatoren, wie z. B. sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine oder Tocopherole, Farbstoffe, wie z. B. Eisenoxidpignemte oder Ruße sowie von den erfindungsgemäßen Polyalkylen(phosphaten) der Formel (I) verschiedene Flammschutzmittel.

Die Flammschutzmittel-Zubereitungen enthalten vorzugsweise
10 - 90 Gew.-% erfindungsgemäße Zusammensetzung
10 - 90 Gew.-% mindestens eines Hilfs- oder Zusatzstoffes B),
wobei die Mengen der Komponenten innerhalb der angegebenen Mengenbereiche so auszuwählen sind, dass die Summe der Komponenten 100 Gew.-% ergibt.

In einer bevorzugten Ausführungsform enthält die erfindungsgemäße Flammschutzmittel-Zubereitung als Hilfs- oder Zusatzstoff B) mindestens ein Flammschutzmittel aus der Reihe Triethylphosphat, Triphenylphosphat, Diphenylkresylphosphat, Trikresylphosphat, isopropylierte oder butylierte Arylphosphate, Bisphenol-A-bis(diphenylphosphat), Resorcinbis(diphenylphosphat), Neopentylglycol-bis(diphenylphosphat), Tris(chlorisopropyl)phosphat, Tris(dichloropropyl)phosphat, Dimethylmethanphosphonat, Diethylethanphosphonat, Dimethylpropanphosphonat, Diethylphosphinsäure-Derivate und -Salze, andere oligomere Phosphate oder Phosphonate, hydroxylgruppenhaltige Phosphorverbindungen, 5,5-Dimethyl-1,3,2-Dioxaphosphorinane-2-oxid-Derivate, 9,10-Dihydro-9-oxa-10-phosphaphenanthren-10-oxid (DOPO) und seine Derivate, Ammoniumphosphat, Ammoniumpolyphosphat, Melaminphosphat, Melaminpolyphosphat, Melamin, Melamincyanurat, Alkylester einer Tetrabrombenzoesäure, bromhaltige Diole hergestellt aus Tetrabromphthalsäureanhydrid, bromhaltige Polyole, bromhaltige Diphenylether, Aluminiumhydroxid, Boehmit, Magnesiumhydroxid, Blähgraphit und Tonmineralien.

Gegenstand der Erfindung ist auch ein flammwidriges Polyurethan, enthaltend als Flammschutzmittel eine erfindungsgemäße Zusammensetzung oder eine erfindungsgemäße Flammschutzmittel-Zubereitung.

Das erfindungsgemäße, flammwidrige Polyurethan kann hergestellt werden, indem man organische Polyisocyanate mit Verbindungen mit mindestens zwei gegenüber Isocyanaten reaktionsfähigen Wasserstoffatomen mit üblichen Treibmitteln, Stabilisatoren, Aktivatoren und/oder weiteren üblichen Hilfs- und Zusatzstoffen in Gegenwart einer erfindungsgemäßen Zusammensetzung umsetzt. Das in dieser Weise hergestellte Polyurethan kann die erfindungsgemäße Zusammensetzung sowohl in seiner ursprünglichen Form als auch in Form seiner Derivate enthalten. Diese Derivate bilden sich durch Reaktion der Polyurethan-Rohstoffe, insbesondere der Polyisocyanate, mit den Hydroxylgruppen der in der erfindungsgemäßen Zusammensetzung enthaltenen Hydroxylgruppen-haltigen Poly(alkylenphosphate).

Die erfindungsgemäße Zusammensetzung wird allgemein in einer Menge von 0,5 bis 30 Gewichtsteilen, bevorzugt 3 bis 25 Gewichtsteile, bezogen auf 100 Gewichtsteile Polyolkomponente, eingesetzt.

Bei den Polyurethanen handelt es sich um Polymere auf Isocyanatbasis, die vorwiegend Urethan- und/oder Isocyanurat- und/oder Allophanat- und/oder Uretdion- und/oder Harnstoff- und/oder Carbodiimidgruppen aufweisen. Die Herstellung von Polymeren auf Isocyanatbasis ist an sich bekannt und z. B. in DE-OS 16 94 142 (= GB 1 211 405), DE-OS 16 94 215 (= US 3,580,890) und DE-OS 17 20 768 (= US 3,620,986) beschrieben.

Bei den erfindungsgemäßen Polyurethanen handelt es sich um duroplastische Polyurethane, Polyurethanschaumstoffe, Polyurethan-Elastomere, thermoplastische Polyurethane, Polyurethan-Beschichtungen und -Lacke, Polyurethan-Klebstoffe und -Bindemittel oder Polyurethan-Fasern.

In einer bevorzugten Ausführungsform der Erfindung handelt es sich bei den erfindungsgemäßen Polyurethanen um Polyurethanschaumstoffe.

Polyurethanschaumstoffe werden grob unterschieden in weiche und harte Schaumstoffe. Zwar können Weich- und Hartschaumstoffe grundsätzlich in etwa die gleiche Raumdichte und Zusammensetzung aufweisen, jedoch sind die Polyurethanweichschäume nur gering vernetzt und weisen bei Druckbelastung nur einen geringen Verformungswiderstand auf. Im Gegensatz dazu besteht die Struktur der Polyurethanhartschäume aus hoch vernetzten Einheiten und der Polyurethanhartschaum zeigt bei Druckbelastung einen sehr hohen Verformungswiderstand. Der typische Polyurethanhartschaum ist geschlossenzellig und weist nur eine niedrige Wärmeleitzahl auf. Primär wird bei der Herstellung von Polyurethanen, die über die Reaktion von Polyolen mit Isocyanaten abläuft, über die Struktur und Molmasse des Polyols sowie über die Reaktivität und Anzahl (Funktionalität) der im Polyol enthaltenen Hydroxylgruppen die spätere Schaumstruktur und seine Eigenschaften beeinflusst. Weitere Einzelheiten zu Hart- und Weichschaumstoffen, den zu ihrer Herstellung einsetzbaren Ausgangsstoffen sowie zu Verfahren zu ihrer Herstellung finden sich in Norbert Adam, Geza Avar, Herbert Blankenheim, Wolfgang Friederichs, Manfred Giersig, Eckehard Weigand, Michael Halfmann, Friedrich-Wilhelm Wittbecker, Donald-Richard Larimer, Udo Maier, Sven Meyer-Ahrens, Karl-Ludwig Noble und Hans-Georg Wussow: "Polyurethanes", Ullmann's Encyclopedia of Industrial Chemistry Release 2005, Electronic Release, 7th ed., chap. 7 ("Foams"), Wiley-VCH, Weinheim 2005.

Bevorzugt weist der erfindungsgemäße Polyurethanschaumstoff ein Raumgewicht von 10 - 130 kg/m³ auf. Besonders bevorzugt weist er ein Raumgewicht von 15 - 40 kg/m³ auf.

Für die Herstellung der erfindungsgemäßen PU-Schaumstoffe auf Isocyanatbasis werden allgemein folgende Ausgangskomponenten eingesetzt:
1. Organische Polyisocyanatkomponenten (i) aus der Reihe der aliphatischen, cycloaliphatischen, araliphatischen, aromatischen und heterocyclische Polyisocyanate (vgl. z.B. DE-OS 27 32 292), beispielsweise solche der Formel Q(NCO)ₙ, in der n = 2 bis 4, vorzugsweise 2 bis 3, und Q einen aliphatischen Kohlenwasserstoffrest mit 2 bis 18, vorzugsweise 6 bis 10 C30 Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 Catomen oder einen araliphatischen Kohlenwasserstoffrest mit 8 bis 15, vorzugsweise 8 bis 13 C-Atomen, bedeuten. Besonders bevorzugt werden in der Regel die technisch leicht zugänglichen Polyisocyanate, die sich vom 2,4- und/oder 2,6-Toluylendiisocyanat bzw. von 5 4,4'- und/oder 2,4'-Diphenylmethandiisocyanat ableiten.
2. Polyolkomponenten (ii), die mindestens zwei gegenüber Isocyanaten reaktionsfähige Wasserstoffatome enthalten mit einem Molekulargewicht von 400 bis 8.000 g/mol. Hierunter versteht man neben Aminogruppen, Thiogruppen oder Carboxylgruppen aufweisende Verbindungen vorzugsweise Hydroxylgruppen aufweisende Verbindungen (Polyole), insbesondere 2 bis 8 Hydroxylgruppen aufweisende Polyole. Soll der Polyurethanschaum ein Weichschaum sein, so werden bevorzugt Polyole mit Molmassen von 2.000 bis 8.000 g/mol und 2 bis 6 Hydroxylgruppen pro Molekül eingesetzt. Soll hingegen ein Hartschaum hergestellt werden, so werden bevorzugt hochverzweigte Polyole mit Molmassen von 400 bis 1.000 g/mol und 2 bis 8 Hydroxylgruppen pro Molekül eingesetzt. Bei den Polyolen handelt es sich insbesondere um Polyether und Polyester sowie Polycarbonate und Polyesteramide, wie sie für die Herstellung von homogenen und von zellförmigen Polyurethanen an sich bekannt sind und wie sie etwa in der DE-OS 28 32 253 (= US 4,263,408) und in der EP 1 555 275 A2 (= US 2005 159 500) beschrieben werden. Die mindestens zwei Hydroxylgruppen aufweisenden Polyether und Polyester sind erfindungsgemäß bevorzugt.
3. Gegebenenfalls Kettenverlängerungsmittel und/oder Vernetzer. Dieses sind Verbindungen mit mindestens zwei gegenüber Isocyanaten reaktionsfähigen Wasserstoffatomen und einem Molekulargewicht von 32 bis 399 g/mol geeignet. Auch hierunter versteht man Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen. Diese Verbindungen weisen in der Regel 2 bis 8, vorzugsweise 2 bis 4 gegenüber Isocyanaten reaktionsfähige Wasserstoffatome auf. Beispiele hierfür werden ebenfalls in der DE-OS 28 32 253 (= US 4,263,408) beschrieben.
4. Wasser und/oder leicht flüchtige Substanzen als Treibmittel, z. B. n-Pentan, i-Pentan, Cyclopentan, halogenhaltige Alkane, wie Trichlormethan, Methylenchlorid oder Chlorfluoralkane, Gase, wie CO₂ und andere. Auch eine Mischung mehrerer Treibmittel kann verwendet werden.
5. Gegebenenfalls können Hilfs- und Zusatzmittel mitverwendet werden, wie Katalysatoren der an sich bekannten Art, oberflächenaktive Zusatzstoffe, wie Emulgatoren und Schaumstabilisatoren, Reaktionsverzögerer, z. B. sauer reagierende Stoffe wie Salzsäure oder organische Säurehalogenide, ferner Zellregler der an sich bekannten Art, wie Paraffine oder Fettalkohole und Dimethylpolysiloxane sowie Pigmente oder Farbstoffe und weitere Flammschutzmittel, ferner Stabilisatoren gegen Alterungs- und Witterungseinflüsse, Kernverfärbungsinhibitoren, Weichmacher und fungistatisch und bakteriostatisch wirkende Substanzen sowie Füllstoffe, wie Bariumsulfat, Kieselgur, Ruß oder Schlämmkreide (DE OS 27 32 292 = US 4,248,930). Als Kernverfärbungsinhibitoren können insbesondere sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine oder Tocopherole enthalten sein. Einzelheiten über Verwendungs- und Wirkungsweise dieser Hilfs- und Zusatzmittel sind im Kunststoff-Handbuch, Band VII, Carl Hanser Verlag, München, 1993, auf den Seiten 104 bis 123 beschrieben.

Als weitere Flammschutzmittel können neben den erfindngsgemäßen Zusammensetzungen in dem erfindungsgemäßen Polyurethanschaumstoff gegebenenfalls ein oder mehrere Verbindungen aus der Reihe
a) organische Phosphorverbindungen, wie beispielsweise Triethylphosphat, aliphatische Bisphosphate, Dimethylmethanphosphonat, Diethylethanphosphonat, Dimethylpropanphosphonat, oligomere Phosphate oder Phosphonate, Hydroxylgruppen-haltige Phosphorverbindungen, 5,5-Dimethyl-1,3,2-dioxaphosphorinan-2-oxid-Derivate, 6H-Dibenz[c,e][1,2]oxa-phosphorin-6-oxid-Derivate, wie z. B. N¹,N²-bis(6-oxido-6H-dibenz[c,e][1,2]oxaphosphorin-6-yl)-1,2-ethandiamin,
b) salzartige Phosphorverbindungen, wie beispielsweise Ammoniumphosphat, Ammoniumpolyphosphat, Melaminphosphat, Melaminpolyphosphat, Metall-Melamin-Polyphosphate, Metallsalze von Dialkylphosphinsäuren, Metallsalze von Alkanphosphonsäuren,
c) Stickstoffverbindungen, wie beispielsweise Melamin, Melamincyanurat, und
d) anorganische Flammschutzmittel, wie beispielsweise Aluminiumhydroxid, Boehmit, Magnesiumhydroxid, Blähgraphit oder Tonmineralien
enthalten sein.

Die erfindungsgemäßen Polyurethanschaumstoffe lassen sich also durch entsprechende, leicht dem Stand der Technik zu entnehmende Wahl der Ausgangsstoffe, insbesondere der Polyolkomponente (ii) als Hart- oder Weichschaumstoffe herstellen.

Die nach der Erfindung erhältlichen Polyurethane finden bevorzugt Anwendung in Möbelpolsterungen, Textileinlagen, Matratzen, Fahrzeugsitzen, Armlehnen, Bauelementen, Sitz- und Armaturverkleidungen, Kabelummantelungen, Dichtungen, Beschichtungen, Lacken, Klebstoffen, Haftvermittlern und Fasern.

Die zur Herstellung der erfindungsgemäßen Polyurethane eingesetzten erfindungsgemäßen, Zusammensetzungen zeichnen sich durch einen niedrigen Gehalt an fünfgliedrigen cyclischen Phosphaten aus. Daher weisen sie eine geringe Neigung zur Säurebildung und eine niedrige Flüchtigkeit auf.

Die erfindungsgemäßen Zusammensetzungen sind flüssig und daher gut zu dosieren. Sie reagieren mit den anderen zur Herstellung der Polyurethane eingesetzten Ausgangsstoffen (den organischen Isocyanatkomponenten (i)) und sind daher fest in die Polymermatrix integriert. Die mit den Hydroxylgruppen-haltigen Poly(alkylenphosphaten) hergestellten Schaumstoffe entsprechen nicht nur den Anforderungen an Flammwidrigkeit, sondern zeigen auch besonders niedrige Foggingwerte.

Anhand der nachfolgenden Beispiele wird die Erfindung näher erläutert, ohne dass dadurch eine Einschränkung der Erfindung bewirkt werden soll.

### Beispiele

Die im Folgenden genannten Teile beziehen sich auf das Gewicht.

### Synthesebeispiel S1:

### Synthese eines Polyalkylenchlorphosphats der Formel (V), worin A für den Rest -CH₂CH₂OCH₂CH₂- steht (gemäß Beispiel S4 aus EP 2 687 534 AI)

In einem Reaktor mit Rührer, Thermometer, Tropftrichter, Rückflusskühler und Vakuumeinrichtung wurden zu 306,7 Teilen Phosphoroxychlorid bei 10 - 20 °C und 500 - 700 mbar 118,7 Teile Diethylenglykol zugetropft. Nach Ende des Zutropfens wurde der Druck weiter bis auf schließlich 5 - 15 mbar abgesenkt und die Temperatur auf 20 - 30 °C angehoben. Ein nahezu farbloser, flüssiger Rückstand verblieb, der 37,4 Gew.-% Chlor enthielt.

### Synthesebeispiele S2 bis S4:

### Synthese von erfindungsgemäßen Zusammensetzungen enthaltend Hydroxylgruppen-haltige Poly(alkylenphosphate) der Formel (I), worin die Reste R¹, R², R³ und R⁴ entweder für Ethyl stehen oder für den Rest -CH₂-CHCH₃-OH oder -CHCH₃-CH₂-OH stehen, wobei mindestens einer der Reste R¹, R², R³ und R⁴ für -CH₂-CHCH₃-OH oder -CHCH₃-CH₂-OH steht, A jeweils für den Rest -CH₂CH₂OCH₂CH₂- steht.

In einem Reaktor mit Rührer, Thermometer, Tropftrichter, Rückflusskühler und Vakuumeinrichtung wurden die in Tabelle 1 angegebenen Mengen Ethanol und Wasser unter Rühren bei 15 °C mit der angegebenen Menge Polyalkylenchlorphosphat aus Beispiel S1 versetzt. Die Reaktionsmischung wurde vier Stunden nachgerührt und dann destillativ von den leichtflüchtigen Bestandteilen befreit. Der dabei verbliebene Rückstand wurde bei 70 °C mit der angegebenen Menge Propylenoxid umgesetzt. Schließlich wurden die leichtflüchtigen Bestandteile wiederum destillativ vollständig entfernt. Als Rückstand verblieb das Produkt in Form einer farblosen Flüssigkeit. Die analytischen Ergebnisse sind ebenfalls in Tabelle 1 zusammengefasst.

**Tabelle 1: Verwendete Rohstoffe (Gewichtsteile) zur Herstellung der Synthesebeispiele S2 bis S4 und Eigenschaften der Produkte.**

| | | **Synthesebeispiel** | | |
|---|---|---|---|---|
| | **Einheit** | **S2** | **S3** | **S4** |
| Polyalkylenchlorphosphat aus Beispiel S1 | Gewichtsteile | 100,7 | 203,8 | 100,1 |
| Ethanol | Gewichtsteile | 163,8 | 326,8 | 163,5 |
| Wasser | Gewichtsteile | 6,67 | 28,78 | 31,15 |
| Wasser/ (Wasser+Ethanol) | mol/mol · 100 % | 9% | 18% | 33% |
| Propylenoxid | Gewichtsteile | 39,5 | 148,6 | 116,7 |
| Säurezahl | mg KOH/g | 0,22 | 0,31 | 0,05 |
| Hydroxylzahl | mg KOH/g | 86 | 122 | 166 |
| Viskosität | mPas bei 23 °C | 134 | 273 | 786 |
| Integral der Signale zwischen 13 und 18 ppm im ³¹P-NMR-Spektrum | Flächen-% | 1,7 % | 2,1 % | 4,1 % |

### Synthesebeispiel S5 bis S7:

### Synthese von Hydroxylgruppen-haltigen Poly(alkylenphosphaten) auf Basis von Phosphorpentoxid gemäß EP 0 771 810 A1 (nicht erfindungsgemäß)

In einem Reaktor mit Rührer, Thermometer, Pulvertrichter, Rückflusskühler und Vakuumeinrichtung wurde die in Tabelle 2 angegebene Menge Ethanol vorgelegt. Die angegebene Menge Phosphorpentoxid wurde potionsweise so zugegeben, dass die Temperatur nicht über 40 °C anstieg. Nach beendeter Zugabe wurde auf 80 °C erhitzt und sechs Stunden bei dieser Temperatur getempert. Dann wurde auf 60 °C abgekühlt und der Pulvertrichter gegen einen Tropftricher getauscht, aus dem die angegebene Menge Propylenoxid zugetropft wurde. Dabei wurde die Reaktionstemperatur allmählich von 60 °C bis auf 100 °C gesteigert. Nach Ende des Zutropfens wurde für eine Stunde bei 100 °C getempert. Schließlich wurden die leichtflüchtigen Bestandteile destillativ vollständig entfernt. Ein brauner, flüssiger Rückstand verblieb.

**Tabelle 2: Verwendete Rohstoffe (Gewichtsteile) zur Herstellung der nicht erfindungsgemäßen Synthesebeispiele S5 bis S7 und Eigenschaften der Produkte**

| | | **Beispiel** | | |
|---|---|---|---|---|
| | **Einheit** | **S5** | **S6** | **S7** |
| Phosphorpentoxid | Gewichtsteile | 283,9 | 42,58 | 42,58 |
| Ethanol | Gewichtsteile | 184,3 | 27,64 | 23,04 |
| Propylenoxid | Gewichtsteile | 645,0 | 112,6 | 132,2 |
| Säurezahl | mg KOH/g | 0,16 | 4,75 | 0,24 |
| Hydroxylzahl | mg KOH/g | 165 | 155 | 77 |
| Integral der Signale zwischen 13 und 18 ppm im ³¹P-NMR-Spektrum | Flächen-% | 16,4 % | 22,2 % | 35,1 % |

### Herstellung von Polyurethanweichschaumstoffen

**Tabelle 3: Verwendete Rohstoffe zur Herstellung von erfindungsgemäße Polyurethanweichschaumstoffen (Beispiele B1 bis B3) und nicht erfindunsgemäßen Polyurethanweichschaumstoffen (Vergleichsbeispiele V1 bis V4)**

| Komponente | Funktion | Beschreibung |
|---|---|---|
| A | Polyol | Arcol^{®} 1105 (Bayer MaterialScience), Polyetherpolyol mit OHZ 56 mg KOH/g |
| B | Treibmittel | Wasser |
| C | Katalysator | Addocat 108^{®} (Rhein Chemie), 70 %ige Lösung von Bis(2-dimethylaminoethyl)ether in Dipropylenglykol |
| D | Katalysator | Addocat^{®} SO (Rhein Chemie), Zinn-II-2-ethylhexanoat |
| E | Stabilisator | Tegostab^{®} B 8232 (Degussa), Siliconstabilisator |
| F1 | Flammschutzmittel | Tris(2,3-dichlorisopropyl)phosphat, TDCP |
| F2 | Flammschutzmittel | Disflamoll^{®} DPK (LANXESS Deutschland GmbH), Diphenylkresylphosphat |
| F3 | Flammschutzmittel | Produkt aus Synthesebeispiel S5 (nicht erfindungsgemäß) |
| F4 | Flammschutzmittel | Produkt aus Synthesebeispiel S2 (erfindungsgemäß) |
| F5 | Flammschutzmittel | Produkt aus Synthesebeispiel S3 (erfindungsgemäß) |
| F6 | Flammschutzmittel | Produkt aus Synthesebeispiel S4 (erfindungsgemäß) |
| G | Diisocyanat | Desmodur^{®} T 80 (Bayer MaterialScience), Toluylendiisocyanat, Isomerenmischung |

### Herstellung von Polyurethanweichschaumstoffen

Die Rohstoffe zur Herstellung von Polyurethanweichschaumstoffen sind in Tabelle 3 angegeben. Die in Tabelle 4 nach Art und Menge angegebenen Komponenten mit Ausnahme des Diisocyanats (Komponente G) wurden zu einer homogenen Mischung verrührt. Dann wurde das Diisocyanat (Komponente G) zugefügt und kurz intensiv untergerührt. Hierbei wurde die Diisocyanatmenge in Abhängigkeit von der Hydroylzahl des Flammschutzmittels so erhöht, dass ein gleicher Index (Verhältnis zwischen Stoffemenge Isocyanat und Hydroxylgruppen) von 108 in allen Formulierunge erhalten blieb. Nach einer Startzeit von 15 - 20 s und einer Steigzeit von 140 - 180 s wurde ein Polyurethanweichschaumstoff mit einem Raumgewicht von 33 kg/m³ erhalten. Bei allen Versuchen wurden gleichmäßig feinporige Schaumstoffe erhalten.

### Bestimmung der Flammwidrigkeit

Die Polyurethanweichschaumstoffe wurden nach den Vorgaben des Federal Motor Vehicle Safety Standards FMVSS-302 getestet und den Brandklassen SE (selbsterlöschend), SE/NBR (selbsterlöschend/keine Brennrate), SE/BR (selbsterlöschend/mit Brennrate), BR (Brennrate) und RB (schnell brennend) zugeordnet. Die Brandversuche wurden für jedes Beispiel fünfmal durchgeführt. Das schlechteste Ergebnis jeder Fünferreihe ist in Tabelle 4 wiedergegeben.

### Bestimmung des Foggings

Das Foggingverhalten der Polyurethanweichschaumstoffe wurde gemäß DIN 75201 B untersucht. Die gemessenen Kondensatmengen nach Lagerung für 16 h bei 100 °C sind in Tabelle 4 wiedergegeben.

### Prüfergebnisse zu Polyurethanweichschaumstoffen

**Tabelle 4: Zusammensetzung (Gewichtsteile) und Prüfergebnisse der erfindungsgemäßen Beispiele B1 bis B3 und der nicht erfindunsgemäßen Vergleichsbeispiele V1 bis V4 zu Polyurethanweichschaumstoffen**

| **Beispiel** | **V1** | **V2** | **V3** | **V4** | **B1** | **B2** | **B3** |
|---|---|---|---|---|---|---|---|
| A | 100 | 100 | 100 | 100 | 100 | 100 | 100 |
| B | 3,0 | 3,0 | 3,0 | 3,0 | 3,0 | 3,0 | 3,0 |
| C | 0,08 | 0,08 | 0,08 | 0,08 | 0,08 | 0,08 | 0,08 |
| D | 0,16 | 0,16 | 0,16 | 0,16 | 0,16 | 0,16 | 0,16 |
| E | 0,80 | 0,80 | 0,80 | 0,80 | 0,80 | 0,80 | 0,80 |
| F1 | | 6 | | | | | |
| F2 | | | 6 | | | | |
| F3 | | | | 6 | | | |
| F4 | | | | | 6 | | |
| F5 | | | | | | 6 | |
| F6 | | | | | | | 6 |
| G | 40,9 | 40,9 | 40,9 | 42,6 | 41,8 | 42,1 | 42,6 |
| MVSS-Klasse | RB | SE | BR | SE | SE | SE | SE |
| Fogging-Kondensat [mg] gemäß DIN 75201 B | 0,12 | 0,79 | 0,72 | 1,74 | 0,36 | 0,27 | 0,25 |

### Auswertung der Ergebnisse zu Polyurethanweichschaumstoffen

In Abwesenheit eines Flammschutzmittels (Vergleichsbeispiel V1) brennt der Polyurethanweichschaumstoff rasch ab (MVSS-Brandklasse RB), zeigt aber einen sehr niedrigen Foggingwert. Ein Schaumstoff mit Tris(dichlorisopropyl)phosphat (Vergleichsbeispiel V2) zeigt einen substanziellen Foggingbeitrag des Flammschutzmitteladditivs und kann die beste MVSS-Brandklasse SE (selbsterlöschend) in allen Wiederholungen des Brandversuchs erreichen. Tris(dichlorisopropyl)phosphat bringt aber die oben beschriebenen Nachteile eines halogenhaltigen Flammschutzmittels mit. Mit der Verwendung des halogenfreien Flammschutzmittels Diphenylkresylphosphat (Vergleichsbeispiel V3) wird dieses Problem zwar umgangen und auch ein niedriger Foggingwert erreicht, aber die Flammschutzwirkung ist mit der MVSS-Brandklasse BR unzureichend. Das im Vergleichsbeispiel V4 eingesetzte Flammschutzmittel weist eine sehr gute Flammschutzwirkung (MVSS-Brandklasse SE, d. h. selbsterlöschend) auf, zeigt aber höhere Foggingwerte, die auf cylische Phosphate zurückgeführt werden können.

Die Beispiele B1 bis B3 zeigen, dass die erfindungsgemäßen Polyurethanweichschaumstoffe ebenfalls die beste Brandklasse SE (selbsterlöschend) in allen Wiederholungen des Brandversuchs erreichen und sich durch die niedrigsten Foggingwerte auszeichnen.

## Patentansprüche

1. Zusammensetzung enthaltend
mindestens ein Hydroxylgruppen-haltiges Poly(alkylenphosphat) der Formel (I) 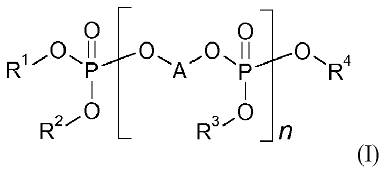 worin
n für eine ganze Zahl von 1 bis 100 steht,
R¹, R², R³ und R⁴ unabhängig voneinander für einen C₁- bis C₈-Alkylrest oder einen Rest der Formel -(CHR⁵-CHR⁶-O)ₘ-H stehen,
worin
m für eine ganze Zahl von 1 bis 5 steht und
R⁵ und R⁶ unabhängig voneinander für H oder Methyl stehen,
mit der Bedingung, dass mindestens einer der Reste R¹, R², R³ und R⁴ für einen Rest der Formel -(CHR⁵-CHR⁶-O)ₘ-H steht,
A für einen geradkettigen oder verzweigten C₄- bis C₂₀-Alkylenrest oder für einen C₃- bis C₆-Cycloalkylenrest steht, oder
A für einen Rest der Formel -CH₂-CH=CH-CH₂-, einen Rest der Formel -CH₂-C≡C-CH₂-, einen Rest der Formel -CHR⁵-CHR⁶-(O-CHR⁷-CHR⁸)ₐ-, einen Rest der Formel -CHR⁵-CHR⁶-S(O)_{b}-CHR⁷-CHR⁸- oder einen Rest der Formel -(CHR⁵-CHR⁶-O)_{c}-R⁹-(O-CHR⁷-CHR⁸)_{d}- steht,
worin
a für eine ganze Zahl von 0 bis 5 steht,
b für eine ganze Zahl von 0 bis 2 steht,
c und d unabhängig voneinander für eine ganze Zahl von 1 bis 5 stehen,
R⁵, R⁶, R⁷ und R⁸ unabhängig voneinander für H oder Methyl stehen,
R⁹ für einen Rest -CH₂-CH=CH-CH₂-, einen Rest -CH₂-C≡C-CH₂-, einen 1,2-Phenylenrest, einen 1,3-Phenylenrest, ein 1,4-Phenylenrest, oder einen Rest der Formel (II) 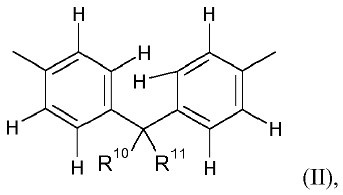 oder einen Rest der Formel (III) 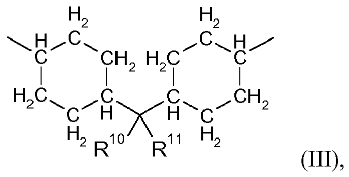 oder einen Rest der Formel (IV) 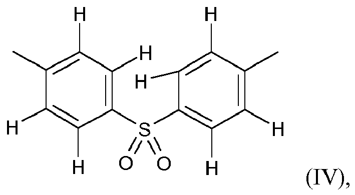 oder einen Rest der Formel -C(=O)-R¹²-C(=O)- steht,
wobei
R¹⁰ und R¹¹ unabhängig voneinander jeweils für H oder C₁- bis C₄-Alkyl stehen,
oder
R¹⁰ und R¹¹ zusammen mit dem Kohlenstoffatom an das sie gebunden sind für einen gegebenenfalls alkylsubstituierten carbocyclischen Ring mit 4 bis 8 C-Atomen stehen,
und
R¹² für einen geradkettigen oder verzweigten C₂- bis C₈-Alkylenrest, einen C₃- bis C₆-Cycloalkylenrest, einen 1,2-Phenylenrest, einen 1,3-Phenylenrest, oder einen 1,4-Phenylenrest steht,
**dadurch gekennzeichnet, dass** im ³¹P-NMR Spektrum der Zusammensetzung, aufgenommen in CDCl₃ als Lösungsmittel mit 85 gewichtsprozentiger Phosphorsäure als externen Standard, die Fläche unter allen Resonanzsignalen im Bereich von 13 bis 18 ppm 5 Prozent oder weniger der gesamten Flächen aller Resonanzsignale im Bereich von - 30 bis 200 ppm beträgt.

2. Zusammensetzung gemäß Anspruch 1, enthaltend
mindestens ein Hydroxylgruppen-haltiges Poly(alkylenphosphat) der Formel (I) 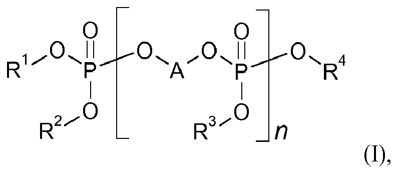 worin
n für eine ganze Zahl von 1 bis 10 steht,
R¹, R², R³ und R⁴ unabhängig voneinander für Ethyl, n-Propyl, iso-Propyl, n-Butyl oder iso -Butyl oder für einen Rest der Formel -(CHR⁵-CHR⁶-O)ₘ-H stehen,
worin
m für eine ganze Zahl von 1 bis 2 steht und
R⁵ und R⁶ unabhängig voneinander für H oder Methyl stehen,
mit der Bedingung, dass mindestens einer der Reste R¹, R², R³ und R⁴ für einen Rest der Formel -(CHR⁵-CHR⁶-O)ₘ-H steht,
A für einen geradkettigen C₄- bis C₆-Alkylenrest oder für einen Rest der Formel
-CHR⁵-CHR⁶-(O-CHR⁷-CHR⁸)ₐ- steht,
worin
a für eine ganze Zahl von 0 bis 2 steht
und
R⁵, R⁶, R⁷ und R⁸ unabhängig voneinander für H oder Methyl stehen.

3. Zusammensetzung gemäß Anspruch 1 oder 2, enthaltend
mindestens ein Hydroxylgruppen-haltiges Poly(alkylenphosphat) der Formel (I) 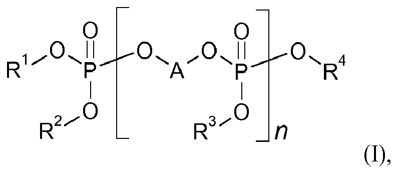 worin
n für eine ganze Zahl von 1 bis 10 steht,
R¹, R², R³ und R⁴ unabhängig voneinander für Ethyl, n-Propyl, oder n-Butyl oder einen Rest der Formel -(CHR⁵-CHR⁶-O)ₘ-H stehen,
worin
m für 1 oder 2 steht und
R⁵ und R⁶ unabhängig voneinander für H oder Methyl stehen,
mit der Bedingung, dass mindestens einer der Reste R¹, R², R³ und R⁴ für einen Rest der Formel -(CHR⁵-CHR⁶-O)ₘ-H steht,
A für einen geradkettigen C₄- Alkylenrest oder für einen Rest der Formel
-CHR⁵-CHR⁶-(O-CHR⁷-CHR⁸)ₐ- steht,
worin
a für 0 oder 1 steht,
R⁵ und R⁶ unabhängig voneinander für H oder Methyl stehen
und
R⁷ und R⁸ gleich sind und für H stehen.

4. Zusammensetzung gemäß wenigstens einem der Ansprüche 1 bis 3, enthaltend mindestens ein Hydroxylgruppen-haltiges Poly(alkylenphosphat der Formel (I), 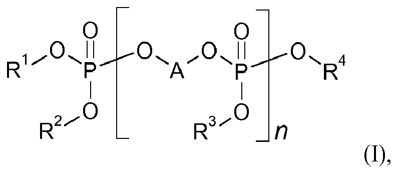 worin
R¹, R², R³ und R⁴ unabhängig voneinander für Ethyl oder den Rest -CH₂-CHCH₃-OH oder den Rest -CHCH₃-CH₂-OH stehen,
wobei mindestens einer der Reste R¹, R², R³ und R⁴ für -CH₂-CHCH₃-OH der -CHCH₃-CH₂-OH steht,
und
A für den Rest -CH₂CH₂OCH₂CH₂- steht.

5. Zusammensetzung gemäß wenigstens einem der Ansprüche 1 bis 4 mit einer Hydroxylzahl von 15 bis 300, bevorzugt 30 bis 250 mg KOH/g.

6. Zusammensetzungen gemäß wenigstens einem der Ansprüche 1 bis 5 mit einer Viskosität bei 23 °C im Bereich von 10 mPas bis 10 000 mPas, bevorzugt 20 mPas bis 1000 mPas.

7. Verfahren zur Herstellung einer Zusammensetzung gemäß wenigstens einem der Ansprüche 1 bis 6, **dadurch gekennzeichnet, dass** mindestens
a) ein Polyalkylenchlorphosphat der Formel (V), 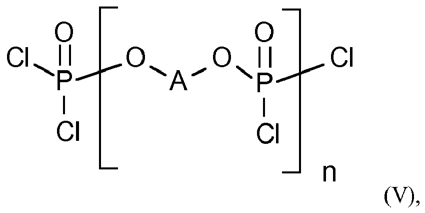 worin
n für eine ganze Zahl von 1 bis 100 steht,
A für einen geradkettigen oder verzweigten C₄- bis C₂₀-Alkylenrest oder für einen C₃- bis C₆-Cycloalkylenrest steht, oder
A für einen Rest der Formel -CH₂-CH=CH-CH₂-, einen Rest der Formel -CH₂-C≡C-CH₂-, einen Rest der Formel -CHR⁵-CHR⁶-(O-CHR⁷-CHR⁸)ₐ, einen Rest der Formel -CHR⁵-CHR⁶-S(O)_{b}-CHR⁷-CHR⁸- oder einen Rest der Formel-(CHR⁵-CHR⁶-O)_{c}-R⁹-(O-CHR⁷-CHR⁸)_{d}- steht,
worin
a für eine ganze Zahl von 0 bis 5 steht,
b für eine ganze Zahl von 0 bis 2 steht,
c und d unabhängig voneinander für eine ganze Zahl von 1 bis 5 stehen,
R⁵, R⁶, R⁷, R⁸ unabhängig voneinander für H oder Methyl stehen,
R⁹ für einen Rest -CH₂-CH=CH-CH₂-, einen Rest -CH₂-C≡C-CH₂-, einen 1,2-Phenylenrest, einen 1,3-Phenylenrest, einen 1,4-Phenylenrest, oder einen Rest der Formel (II) 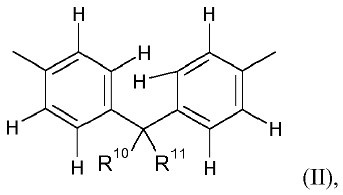 oder einen Rest der Formel (III) 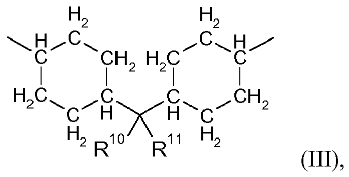 oder einen Rest der Formel (IV) 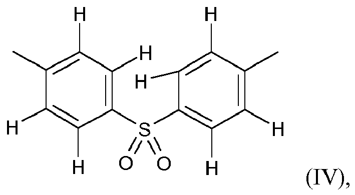 oder einen Rest der Formel -C(=O)-R¹²-C(=O)- steht,
worin
R¹⁰ und R¹¹ unabhängig voneinander für H oder C₁- bis C₄-Alkyl stehen,
oder
R¹⁰ und R¹¹ zusammen mit dem Kohlenstoffatom an das sie gebunden sind für einen gegebenenfalls alkylsubstituierten carbocyclischen Ring mit 4 bis 8 C-Atomen stehen,
R¹² für einen geradkettigen oder verzweigten C₂- bis C₈-Alkylenrest, einen C₃- bis C₆-Cycloalkylenrest, einen 1,2-Phenylenrest, einen 1,3-Phenylenrest, oder einen 1,4-Phenylenrest steht,
mit einer Mischung enthaltend mindestens einen C₁- bis C₈-Alkohol und Wasser umgesetzt wird, und
b) das Produkt der Umsetzung aus a) mit mindestens einer Verbindung der Formel (VI) 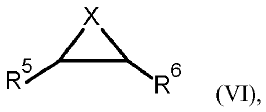 worin
X für -O- oder -O-C(=O)-O- steht und
R⁵ und R⁶ unabhängig voneinander für H oder Methyl stehen,
umgesetzt wird.

8. Verfahren gemäß Anspruch 7, **dadurch gekennzeichnet, dass** in Stufe a) eine Mischung enthaltend mindestens einen C₁- bis C₈-Alkohol und 1 Mol-% bis 75 Mol-% Wasser bezogen auf die Summe aus C₁- bis C₈-Alkohol und Wasser eingesetzt wird.

9. Verfahren gemäß Anspruch 7, **dadurch gekennzeichnet, dass** in Stufe a) eine Mischung enthaltend Ethanol und/oder n-Butanol und 5 Mol-% bis 40 Mol-% Wasser bezogen auf die Summe aus Ethanol und/oder n-Butanol und Wasser eingesetzt wird.

10. Verwendung einer Zusammensetzungen gemäß wenigstens einem der Ansprüche 1 bis 6 als Flammschutzmittel für synthetische und natürliche Werkstoffe, insbesondere synthetische Polymere, gegebenenfalls modifizierte natürliche Polymere, Holzwerkstoffe, Leder und Papier.

11. Flammschutzmittel-Zubereitungen enthaltend eine Zusammensetzung gemäß wenigstens einem der Ansprüche 1 bis 6 und mindestens einen Hilfs- oder Zusatzstoff.

12. Flammwidriges Polyurethan, **dadurch gekennzeichnet, dass** es als Flammschutzmittel eine erfindungsgemäße Zusammensetzung gemäß wenigstens einem der Ansprüche 1 bis 6 oder eine Flammschutzmittel-Zubereitung gemäß Anspruch 11 enthält.

13. Flammwidriges Polyurethan gemäß Anspruch 12, **dadurch gekennzeichnet, dass** es sich um ein duroplastisches Polyurethan, Polyurethanschaumstoff, Polyurethan-Elastomer, thermoplastisches Polyurethan, Polyurethan-Beschichtung, Polyurethn-Lack, Polyurethan-Klebstoff, Polyurethan -Bindemittel, Polyurethan-Fasern oder Mischungen davon handelt.

14. Flammwidriger Polyurethanschaumstoff, **dadurch gekennzeichnet, dass** er als Flammschutzmittel eine erfindungsgemäße Zusammensetzung gemäß wenigstens einem der Ansprüche 1 bis 6 oder eine Flammschutzmittel-Zubereitung gemäß Anspruch 11 enthält.

15. Verfahren zur Herstellung eines flammwidrigen Polyurethans gemäß Anspruch 12, **dadurch gekennzeichnet, dass** mindestens ein organisches Polyisocyanat mit mindestens einer Polyolkomponente, die mindestens zwei gegenüber Isocyanaten reaktionsfähigen Wasserstoffatome enthält, mit üblichen Treibmitteln, Stabilisatoren, Aktivatoren und/oder weiteren üblichen Hilfs- und Zusatzstoffen in Gegenwart einer Zusammensetzung gemäß wenigstens einem der Ansprüche 1 bis 6 oder in Gegenwart einer Flammschutzmittel-Zubereitung gemäß Anspruch 11 umgesetzt wird.

16. Flammwidrig ausgerüstete Formteile, Lacke, Klebstoffe, Beschichtungen, Halftvermittler und Fasern **dadurch gekennzeichnet, dass** sie ein Polyurethan gemäß wenigstens einem der Ansprüche 12 bis 14 enthalten.

17. Verwendung eines Polyurethans gemäß wenigstens einem der Ansprüche 12 und 14 zur Herstellung von Möbelpolsterungen, Textileinlagen, Matratzen, Fahrzeugsitzen, Armlehnen, Bauelementen, Sitz- und Armaturverkleidungen, Kabelummantelungen, Dichtungen, Beschichtungen, Lacken, Klebstoffen, Haftvermittlern und Fasern.
